(19) Europäisches Patentamt
European Patent Office
Office européen des brevets

(11) Veröffentlichungsnummer: **0 327 951 B1**

# (12) EUROPÄISCHE PATENTSCHRIFT

(45) Veröffentlichungstag der Patentschrift: **21.07.93**

(51) Int. Cl.5: **G11B 7/24**, C08G 64/14, C08G 64/28

(21) Anmeldenummer: **89101761.8**

(22) Anmeldetag: **02.02.89**

## (54) Polycarbonate mit Aralkylphenylendgruppen, ihre Herstellung und Verwendung.

(30) Priorität: **10.02.88 DE 3803939**

(43) Veröffentlichungstag der Anmeldung:
**16.08.89 Patentblatt 89/33**

(45) Bekanntmachung des Hinweises auf die Patenterteilung:
**21.07.93 Patentblatt 93/29**

(84) Benannte Vertragsstaaten:
**DE FR GB IT NL**

(56) Entgegenhaltungen:
**EP-A- 0 249 882**
**US-A- 4 330 663**
**US-A- 4 699 971**
**US-E- 27 682**

(73) Patentinhaber: **BAYER AG**
**W-5090 Leverkusen 1 Bayerwerk(DE)**

(72) Erfinder: **Dujardin, Ralf, Dr.**
**Bodelschwinghstrasse 18**
**W-4150 Krefeld(DE)**
Erfinder: **Meyer, Rolf-Volker, Dr.**
**Buchheimer Strasse 23**
**W-4150 Krefeld(DE)**
Erfinder: **Siebourg, Wolfgang, Dr.**
**Augustastrasse 24**
**W-5300 Bonn 2(DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung sind thermoplatische, aromatische Polycarbonate mit mittleren Molekulargewichten $\overline{M}n$ (Zahlenmittel, ermittelt durch Gelchromatographie nach vorheriger Eichung) von mindestens 5000 g/Mol, vorzugsweise von 7500 g/Mol bis 100 000 g/Mol und insbesondere von 9000 g/Mol bis 25 000 g/Mol auf Basis von Diphenolen, Kettenabbrechern und gegebenenfalls Verzweigern, die dadurch gekennzeichnet sind, daß die Kettenabbrecher der Formel (I)

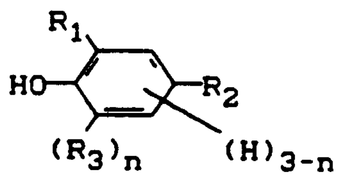

(I)

entsprechen, worin

$R_1$, $R_2$ und $R_3$ gleich oder verschieden sind und $C_2$-$C_{12}$-Alkyl oder $C_8$-$C_{20}$-Aralkyl sind, wobei Ar vorzugsweise Phenyl, Diphenyl oder Naphthyl ist, und worin mindestens einer der Reste $R_1$ oder $R_2$ ein $C_8$-$C_{20}$-Aralkyl-Rest ist, und worin "n" einen Wert zwischen 0,5 und 1, vorzugsweise zwischen 0,6 und 0,9 hat.

Die erfindungsgemäß einzusetzenden Kettenabbrecher der Formel (I) können einzelne Verbindungen sein, sind aber in der Regel Gemische von Verbindungen. Sie sind entweder literaturbekannt oder nach literaturbekannten Verfahren, beispielsweise durch Alkylierung von Phenolen, erhältlich (siehe beispielsweise K.D. Bode in Houben-Weyl, "Methoden der organischen Chemie", Vol. 6/1c, Phenole, Teil 2, Seiten 925 ff, Thieme Verlag 1976).

Gegenstand der vorliegenden Erfindung ist außerdem die Verwendung der Aralkylphenole der Formel (I) als Kettenabbrecher zur Herstellung von thermoplastischen, aromatischen Polycarbonaten.

Gegenstand der vorliegenden Erfindung ist außerdem die Herstellung von thermoplastischen aromatischen Polycarbonaten mit Molekulargewichten $\overline{M}n$ (Zahlenmittel, gemessen wie eingangs dargelegt) von mindestens 5000 g/ Mol, vorzugsweise von 7500 g/Mol bis 100 000 g/Mol und insbesondere von 9000 /Mol bis 25 000 g/Mol, nach dem bekannten Zweiphasengrenzflächenverfahren, nach dem bekannten Verfahren in homogener Lösung (dem sogenannten Pyridinverfahren) oder nach dem bekannten Schmelzumesterungsverfahren durch Umsetzung von reaktiven Kohlensäurederivarten mit Diphenolen, Kettenabbrechern und gegebenenfalls mit Verzweigern, das dadurch gekennzeichnet ist, daß man als Kettenabbrecher Phenole der Formel (I) einsetzt.

Gegenstand der vorliegenden Erfindung sind außerdem die nach dem erfindungsgemäßen Verfahren erhältlichen thermoplastischen aromatischen Polycarbonate.

Die erfindungsgemäßen Polycarbonate sind aufgrund ihres guten Eigenschaftsbildes, insbesondere aufgrund ihres guten Fließverhaltens, zur Herstellung von Formteilen mit hoher Maßgenauigkeit geeignet, wie sie insbesondere für optische Geräte, wie Datenspeicher oder Audio-Compact-Discs, notwendig sind.

Gegenstand der vorliegenden Erfindung ist somit außerdem die Verwendung der erfindungsgemäßen aromatischen thermoplastischen Polycarbonate zur Herstellung von Formkörpern für optische Zwecke, wie Datenspeicher oder Audio-Compact-Discs.

Kettenabbrecher der verschiedensten Art sind bereits für die Polycarbonatherstellung verwendet worden (siehe beispielsweise US-A- 3 085 992, US-A- 3 399 172, US-A-3 028 365, US-A- 4 111 910, EP-A- 0 001 579, EP-A-0 006 579, US-A- 4 677 184, Jp-A- 34992/76 und DE-A-2 842 005). Am gebräuchlichsten sind Phenole und Alkylphenole.

Ein wichtiges Ziel bei der Auswahl von Kettenabbrechern für Polycarbonate ist das Verhältnis von Molekulargewicht und mechanischen Eigenschaften einerseits zu rheologischen Eigenschaften und Verarbeitbarkeit andererseits. Ist das Molekulargewicht niedrig, so sind zwar die rheologischen Eigenschaften und die Verarbeitbarkeit gut, aber häufig die mechanischen Eigenschaften des Polycarbonats nicht mehr optimal; ist das Molekulargewicht hoch, so sind zwar die mechanischen Eigenschaften günstig, aber die Verarbeitbarkeit schwieriger.

Die Verwendung der Kettenabbrecher der Formel (I) bewirkt nun überraschenderweise eine günstige Eigenschaftskombination bezüglich mechanischen Eigenschaften und rheologischen Eigenschaften bei jeweils gegebenem Molekulargewicht.

Erfindungsgemäß geeignete Verbindungen der allgemeinen Formel (I) sind beispielsweise Reaktionsprodukte aus Phenol und Styrol, Phenol und α-Methylstyrol, Phenol und p-Methylstyrol, p-Isooctylphenol

und Styrol, Dodecylphenol-Gemische mit Styrol, Phenol mit Styrol und Ethylen, Phenol mit Isobuten und Styrol etc.

Die Bestimmung des mittleren Molekulargewichts der eingesetzten technischen Arylalkylphenolgemische der allgemeinen Formel I erfolgt durch Ermittlung der OH-Zahl (OH-Z) nach bekannten Methoden. Die OH-Zahl ist eine Meßzahl, die angibt, wieviel Milligramm Kaliumhydroxid der Essigsäuremenge äquivalent sind, die von 1 g Substanz bei der Acetylierung gebunden wird. Die Bestimmung der OH-Zahl erfolgt nach allgemein bekannten Methoden, wie z.B. von. E. Schröder, G. Müller und K.-F. Arndt in "Leitfaden der Polymercharakterisierung", S. 23 ff (Akademie Verlag Berlin 1982) beschrieben.

Das mittlere Molekulargewicht ($\overline{M}G$) der eingesetzten technischen Gemische der allgemeinen Formel I erfolgt dementsprechend nach der allgemeinen bekannten Formel

$$\overline{M}G = \frac{5,6 \cdot 10^4}{\text{OH-Zahl}} \quad (g \cdot mol^{-1})$$

Die OH-Zahl der eingesetzten Arylalkylphenolgemische der allgemeinen Formel (I) liegt zwischen Werten von 67-248, bevorzugt sind Werte zwischen 100-185. Den oben aufgeführten OH-Zahlen entsprechen mittlere Molekulargewichte der Verbindungen von 226-836 g/Mol und im Vorzugsbereich von 303-560 g/Mol.

Die Menge an Kettenabbrecher der Formel (I) zur Einstellung der Molekulargewichte $\overline{M}n$ zwischen 5000 g/Mol und 100 000 g/Mol beträgt in bekannter Weise zwischen 0,5 Mol-% und 10 Mol-%, vorzugsweise zwischen 2 Mol-% und 7 Mol-%, bezogen jeweils auf Mole an eingesetzten Diphenolen.

Bei der zusätzlichen Mitverwendung von Verzweigern, also von dreifunktionellen oder mehr als dreifunktionellen Verbindungen in den üblichen Mengen von 0,05 Mol-% bis 2 Mol-%, bezogen auf Mole Diphenole, beträgt die Menge an Kettenabbrecher der Formel (I) zwischen 0,5 Mol-% und 10 Mol-%, vorzugsweise zwischen 3 Mol-% und 6 Mol-%.

Die erfindungsgemäß einsetzbaren Diphenole können sowohl einkernig als auch mehrkernig sein, sie können zusätzlich Heteroatome enthalten oder/und zusätzlich substituiert sein, wobei Halogen und Alkyl, insbesondere Chlor, Brom, Methyl und Ethyl die bevorzugten Substituierten sind.

Erfindungsgemäß einsetzbare Diphenole sind vorzugsweise solche der Formel (II)

HO-Z-OH,

worin Z ein zweiwertiger, aromatischer Rest mit 6 bis 30 C-Atome ist, der unsubstituiert oder durch Halogen, beispielsweise Chlor oder Brom, oder durch Alkyl, beispielsweise Methyl oder Ethyl, substituiert sein kann.

Geeignete Diphenole sind
Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfoxide,
Bis-(hydroxyphenyl)-sulfone,
$\alpha,\alpha'$-Bis-(hydroxyphenyl)-diisopropylbenzole und
$\alpha,\omega$-Bis-(hydroxyphenyl)-polysiloxane,
sowie deren kernalkylierte und kernhalogenierte Verbindungen. Diese und weitere geeignete Diphenole sind z.B. in den US-A- 3 028 365, 2 999 835, 3 148 172, 2 991 273, 3 271 367 und 2 999 846, in den deutschen Offenlegungsschriften 1 570 703, 2 063 050, 2 063 052, 2 211 956, der französischen Patentschrift 1 561 518, der europäischen Offenlegungsschrift EP-A-0122 535 und in der Monographie "H. Schnell, Chemistry and Physics of Polycarbonates, Intersciene Publiers, New York, 1964" beschrieben.

Bevorzugte Diphenole sind beispielsweise
4,4'-Dihydroxydiphenyl,

2,2-Bis-(4-hydroxyphenyl)-propan,
2,4-Bis-(4-hydroxyphenyl)-2-methylbutan,
1,1-Bis-(4-hydroxyphenyl)-cyclohexan,
α,α'-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-Dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
α,α'-Bis-(3,5-dimethyl-4-hydroxyphenyl)-p-diisopropylbenzol,
2,2-Bis-(3,5-dichlor-4-hydroxyphenyl)-propan,
2,2-Bis-(3,5-dibrom-4-hydroxyphenyl)-propan und solche der Formel IIa

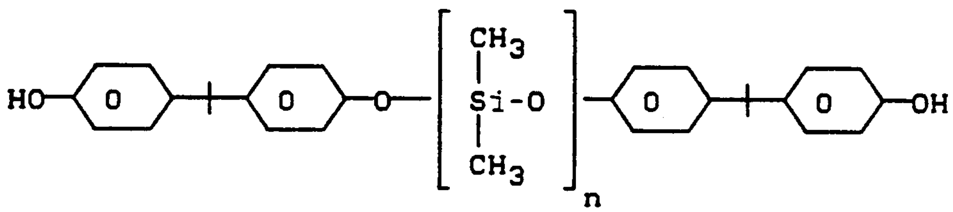

worin n = 40, 60, 80 oder 100 ist.

Besonders bevorzugte Diphenole sind z.B.:
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan,
1,1-Bis-(4-hydroxyphenyl)-cyclohexan.

Es können auch beliebige Mischungen der vorgenannten Diphenole verwendet werden.

Unter den Bedingungen der Polycarbonatherstellung reaktive Kohlensäurederivate sind für das Phasengrenzflächenverfahren sowie für das Verfahren in homogenen Lösung Carbonylhalogenide sowie die Bishalogenformiate der einzusetzenden Diphenole. Phosgen sowie die Bischlorformiate sind bevorzugt, besonders bevorzugt ist Phosgen.

Für das Schmelzumesterungsverfahren reaktive Kohlensäurederivate sind Diarylcarbonate, insbesondere Diphenylcarbonat oder die Bis-arylcarbonate der einzusetzenden Diphenole; bevorzugt wird für das Schmelzumesterungsverfahren Diphenylcarbonat.

Die Menge an Kohlensäurederivat beträgt im Falle des Phasengrenzflächenverfahrens und des Verfahrens in homogener Lösung zwischen 1 Mol und 2 Mol, pro Mol Diphenol, wobei bei Einsatz von Bishalogenformiaten zwischen 0,5 Mol und 1 Mol pro Mol Diphenol eingesetzt wird.

Die Menge an Kohlensäurederivat beträgt im Falle des Schmelzumesterungsverfahrens zwischen 1,0 Mol und 2,5 Mol, pro Mol Diphenol, wobei bei Einsatz von Bisarylcarbonaten 1,0 Mol bis 1,5 Mol pro Mol Diphenol benötigt werden.

Erfindungsgemäß geeignete Verzweiger, als dreifunktionelle oder mehr als dreifunktionelle Verbindungen, wobei "funktionell" Reaktivität unter den Bedingungen der Polycarbonatherstellungsverfahren bedeutet, sind insbesondere solche mit drei oder mehr als drei phenolischen OH-Gruppen.

Einige der verwendbaren Verbindungen mit drei oder mehr als drei phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)cyclohexyl]-propan, 2,4-Bis-(4-hydroxyphenyl-isopropyl)phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenylisopropyl)-phenyl)-orthoterephthalsäureester, Tetra(4-hydroxyphenyl)-methan, Tetra-(4-(4-hydroxyphenyl-isopropyl)-phenoxy)-methan und 1,4-Bis-((4',4"-dihydroxytriphenyl)-methyl)-benzol. Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Die Reaktionsbedingungen für die erfindungsgemäß geeigneten Polycarbonatherstellungsvarianten, also Reaktionstemperaturen, Reaktionsdrucke, gegebenenfalls einzusetzende Lösungsmittel, geeignete Katalysatoren, Reaktionszeiten, einzuhaltende Konzentrationen der Reaktanten im gegebenenfalls einzusetzenden Lösungsmittel, Katalysatormengen, Art und Menge an basischen Verbindungen etc. sind bekannt und zu den bekannten Bedingungen anwendbar.

Die zu verwendenden Vorrichtungen, Reaktionsgefäße, Rührwerke etc. sind ebenfalls geläufig.

Die Herstellung der erfindungsgemäßen Polycarbonate erfolge vorzugsweise nach dem Phasengrenzflächenverfahren (vgl. H. Schnell, "Chemistry and Physics of Polycarbonates", Polymer Reviews, Vol. IX, Seite 33 ff, Interscience Publ., (1964)).

Hierbei wird im allgemeinen wie folgt verfahren: Die Diphenole, vorzugsweise die der Formel (II), werden in wäßriger alkalischer Phase gelöst. Dazu werden die zur Herstellung der erfindungsgemäßen Polycarbonate erforderlichen Kettenabbrecher der Formel (I) in Mengen von 0,5-10 Mol-%, vorzugsweise 2-7 Mol-%, bezogen auf die Mole Diphenole, zugegeben.

Dann wird nach Zugabe einer inerten, vorzugsweise Polycarbonat lösenden, organischen Phase bei Reaktionstemperaturen zwischen 0° und 40°C mit Phosgen nach der Methode der Phasengrenzflächenkondensation umgesetzt.

Dabei ist es notwendig, daß sich die Verbindungen der Formel (I) gut in wäßrigem alkalischen Medium lösen. Hierbei zeigen die Verbindungen der Formel (I) eine vergleichbare Löslichkeit und Reaktivität wie die üblicherweise als Endgruppen verwendeten Phenole, wie z.B. Phenol, p-tert.-Butylphenol und p-Isooctylphenol. Das ist umso überraschender, weil bereits 2,6-di-tert.-butyl-substituierte Phenole im wäßrigen alkalischen Medium unlöslich sind (K. Findeisen in Houben-Weyl, "Methoden der organischen Chemie", Vol. 6/1c, S. 1196 ff., Thieme-Verlag 1976).

Wegen des hohen Anteils an 2,4,6-trisubstituierten Phenolen ($n > 0,5$ bedeutet mehr als 50 % trisubstituierte Verbindungen) im Kettenabbrechergemisch der Formel (I), war die Löslichkeit nicht erwartet worden. Die gute Eignung der Verbindungen der Formel (I) als Kettenabbrecher für die Polycarbonatsynthese nach dem Phasengrenzflächenverfahren war daher nicht vorhersehbar.

Die gegebenenfalls mitzuverwendenden 0,05 bis 2 Mol-%, bezogen auf eingesetzte Diphenole, an Verzweigern können entweder mit den Diphenolen selbst und den Kettenabbrechern der Formel (I) in der wäßrig alkalischen Phase vorgelegt werden, oder in einem organischen Lösungsmittel gelöst vor der Phosgenierung zugegeben werden.

Anstelle der Diphenole können auch deren Mono- und/oder Bis-chlorkohlensäureester mitverwendet werden, wobei diese in organischen Lösungsmitteln gelöst zugegeben werden. Die Menge an Kettenabbrecher der Formel (I) sowie an Verzweiger richtet sich dann nach Molen an Diphenolat-Struktureinheiten, also bei Einsatz der Diphenole der Formel (II) nach den -O-Z-O- Struktureinheiten.

Auch kann bei Einsatz von Chlorkohlensäureestern die Phosgenmenge in bekannter Weise entsprechend reduziert werden.

Die erfindungsgemäß einzusetzenden Kettenabbrecher der Formel (I) können auch während der Phosgenierung in Lösung zugesetzt werden. Geeignete organische Lösungsmittel für die Lösung der Kettenabbrecher der Formel (I) sowie gegebenenfalls für die Verzweiger und die Chlorkohlensäureester sind beispielsweise Methylenchlorid, Chlorbenzol, Acetonitril sowie Mischungen dieser Lösungsmittel, insbesondere Mischungen aus Methylenchlorid und Chlorbenzol.

Als organische Phase für die Phasengrenzflächenpolykondensation dient beispielsweise Methylenchlorid, Chlorbenzol sowie Mischungen aus Methylenchlorid und Chlorbenzol.

Die Herstellung der erfindungsgemäßen Polycarbonate nach dem Phasengrenzflächenverfahren kann in üblicher Weise durch Katalysatoren wie tertiäre Amine, insbesondere tertiäre aliphatische Amine wie Tributylamin oder Triethylenamin katalysiert werden; die Katalysatoren können in Mengen von 0,05 bis 10 Mol-%, bezogen auf Mole an eingesetzten Diphenolen beziehungsweise bezogen auf Mole an Diphenolat-Struktureinheiten eingesetzt werden. Die Katalysatoren können vor Beginn der Phosgenierung oder während oder auch nach der Phosgenierung zugesetzt werden.

Die Isolierung der erfindungsgemäßen Polycarbonate erfolgt in bekannter Weise, beispielsweise durch Ausdampfen der abgetrennten und gewaschenen Lösung des Polycarbonats im organischen Lösungsmittel wie Ausdampfextruder und anschließender Extrusion und Granulierung des Polycarbonats in bekannter Weise.

Die erfindungsgemäßen Polycarbonate zeigen beispielsweise vergleichen mit entsprechenden, aber mit Phenol, p-tert.-Butylphenol oder 4-Isooctylphenol terminierten Polycarbonaten eine deutlich verbesserte Fließfähigkeit bei vergleichbarem mittleren Molekulargewicht.

Die erfindungsgemäßen Polycarbonate sind bei Temperaturen von 260°C to 320°C in üblicher Weise thermoplastisch verarbeitbar. Durch Spritzguß oder via Extrusion können beliebige Formkörper und Folien

in bekannter Weise hergestellt werden.

Die erfindungsgemäßen Polycarbonate sind in Lösungsmitteln wie chlorierten Kohlenwasserstoffe z.B. Methylenchlorid gut löslich und können somit beispielsweise in bekannter Weise zu Gießfolien verarbeitet werden.

Den erfindungsgemäßen Polycarbonaten können die üblichen Additive wie Alterungsschutzmittel gegen UV-Einwirkung $O_2$-Einwirkung und Feuchtigkeitseinwirkung, Flammschutzmittel, Verarbeitungsmittel, wie Gleitmittel, Entformungsmittel und Weichmacher, und Füllstoffe in bekannter Weise zugesetzt werden.

Im einzelnen können beispielsweise den erfindungsgemäßen Polycarbonaten Ruß, Kieselgur, Kaolin, Tone, $CaF_2$, $CaCO_3$, Aluminiumoxide, Glasfasern oder anorganische Pigmente sowohl als Füllstoffe als auch als Nucleirungsmittel zugesetzt werden.

Geeignete Entformungsmittel sind beispielsweise Glyceintristearat, Trimethylolpropantristearat, Pentaerythrit-tetrastearat sowie die entsprechenden Palmitinsäureester oder Myristinsäureester eingesetzt werden.

In den nachfolgenden Beispielen ist $\eta_{rel}$ gemessen in $CH_2Cl_2$ bei 25 °C und bei einer Konzentration von 0,5 Gew.-%.

Beispiel 1

4,56 kg Bisphenol A gelöst in 8 kg 45 %iger Natronlauge und 40 kg Wasser werden mit 20 kg Methylenchlorid und 20 kg Chlorbenzol bei 20 °C vorgelegt. In die gerührte Mischung werden 295,3 g $\hat{=}$ 4 Mol-% bezogen auf Bisphenol A eines technischen Gemisches aus 2,4-Di- und 2,4,6-Tri-(1-phenylethyl)-phenol (OH-Zahl = 150) gegeben und anschließend bei pH 13 - 14 und 21 - 25 °C in 1 h 2,7 kg Phosgen eingeleitet. 28 ml N-Ethylpiperidin werden danach hinzugegeben und noch 1 h gerührt.

Die bisphenolatfreie wäßrige Phase wird abgetrennt, die organische Phase nach Ansäuern mit Phosphorsäure mit Wasser neutral gewaschen und von Lösungsmittel befreit. Das Polycarbonat zeigte die rel. Lösungsviskosität von $\eta_{rel}$ = 1,263.

Beispiel 2

Wie in Beispiel 1 beschrieben, wurde ein Polycarbonat mit 329,84 g $\hat{=}$ 4 Mol-% eines technischen Gemisches aus 2,4-Di- und 2,4,6-Tri-(1-methyl-1-phenylethyl)-phenol (OH-Zahl = 136) hergestellt. $\eta_{rel}$ = 1,274.

Beispiel 3

Wie in Beispiel 1 beschrieben, wurde ein Polycarbonat mit 668,66 g $\hat{=}$ 4 Mol-% eines technischen Gemisches aus den 2,4- und 2,4,6-Stellungisomeren der Alkylierungsprodukte von Phenol mit Isobuten und Styrol (OH-Zahl = 67) hergestellt. $\eta_{rel}$ = 1,278.

Vergleichsversuche A - C

Wie in Beispiel 1 beschrieben, wurden Polycarbonate mit jeweils 4 Mol-% an folgenden Kettenabbrechern hergestellt:

| Vergl.Bsp. | Kettenabbrecher | (g) | $\eta_{rel}$ | OHZ |
|---|---|---|---|---|
| A | p-tert.-Butylphenol | 120 | 1,267 | 373 |
| B | Phenol | 75 | 1,261 | 596 |
| C | p-iso-Octylphenol | 165 | 1,270 | 272 |

Die durch Gelpermeationschromatographie nach vorhergehender Eichung ermittelten mittleren Molekulargewichte ($\overline{M}n$) sowie die mit einem Contraves-Rheomat 30 bestimmten Schmelzviskositäten ($\eta_{melt}$) bei 320 °C und einer Schubspannung $\tau$ = $10^3$ Pa, sind der Tabelle 1 für die Beispiele 1 - 3 und die Vergleichsversuche A - C zu entnehmen.

| Beispiel | $\overline{M}_n$ (kg/Mol) | $\eta_{melt}$ (Pas) |
|---|---|---|
| 1 | 12,5 | 240 |
| 2 | 12,7 | 265 |
| 3 | 12,5 | 255 |
| A | 12,8 | 310 |
| B | 12,2 | 315 |
| C | 12,6 | 295 |

**Patentansprüche**

1. Thermoplastische, aromatische Polycarbonate mit mittleren Molekulargewichten $\overline{M}n$ (Zahlenmittel, ermittelt durch Gelchromatographie nach vorheriger Eichung) von mindestens 5000 g/Mol auf Basis von Diphenolen, Kettenabbrechern und gegebenenfalls Verzweigern, dadurch gekennzeichnet, daß die Kettenabbrecher der Formel (I)

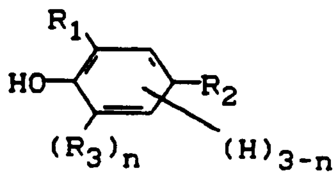

(I)

entsprechen, worin $R_1$, $R_2$ und $R_3$ gleich oder verschieden sind und $C_2$-$C_{12}$-Alkyl oder $C_8$-$C_{20}$-Aralkyl sind, worin mindestens einer der Reste $R_1$ oder $R_2$ ein $C_8$-$C_{20}$-Aralkyl-Rest ist, und worin "n" einen Wert zwischen 0,5 und 1 hat.

2. Polycarbonate gemäß Anspruch 1, dadurch gekennzeichnet, daß in den Kettenabbrechern der Formel (I) "n" einen Wert von 0,6 bis 0,9 hat.

3. Polycarbonate gemäß Anspruch 1, dadurch gekennzeichnet, daß in den Aralkyl-Resten der Kettenabbrecher der Formel (I) Ar Phenyl, Diphenyl oder Naphthyl ist.

4. Polycarbonate gemäß Ansprüchen 1 bis 3 mit mittleren Molekulargewichten ($\overline{M}n$) von 7500 g/Mol bis 100.000 g/Mol.

5. Verwendung der Aralkylphenole der Formel (I) der Ansprüche 1 bi 3 als Kettenabbrecher zur Herstellung von thermoplastischen, aromatischen Polycarbonaten.

6. Verfahren zur Herstellung der thermoplastischen aromatischen Polycarbonate der Ansprüche 1 bis 4, nach dem bekannten Zweiphasengrenzflächenverfahren, nach dem bekannten Verfahren in homogener Lösung oder nach dem bekannten Schmelzumesterungsverfahren durch Umsetzung von reaktiven Kohlensäurederivaten mit Diphenolen, Kettenabbrechern und gegebenenfalls mit Verzweigern, dadurch gekennzeichnet, daß man als Kettenabbrecher Phenole der Formel (I) des Anspruchs 1 einsetzt.

7. Verwendung der Polycarbonate der Ansprüche 1 bis 4 zur Herstellung von Formkörpern für optische Zwecke.

8. Verwendung gemäß Anspruch 7 zur Herstellung von Datenspeichern und Audio-Compact-Discs.

**Claims**

1. Thermoplastic, aromatic polycarbonates having average molecular weights $\overline{M}_n$ (number average determined by gel chromatography after calibration) of at least 5000 g/mol based on diphenols, chain terminators and optionally branching agents, characterised in that the chain terminators correspond to formula (I)

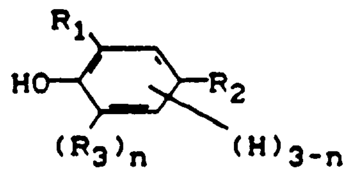

(I)

wherein $R_1$, $R_2$ and $R_3$ may be identical or different and stand for $C_2$-$C_{12}$ alkyl or $C_8$-$C_{20}$ aralkyl, at least one of the groups $R_1$ or $R_2$ being a $C_8$-$C_{20}$ aralkyl group and "n" having a value of from 0.5 to 1.

2. Polycarbonates according to Claim 1, characterised in that "n" in the chain terminators of formula (I) has a value of from 0.6 to 0.9.

3. Polycarbonates according to claim 1, characterised in that in the aralkyl groups of the chain terminators of formula (I), Ar stands for phenyl, diphenyl or naphthyl.

4. Polycarbonates according to claims 1 to 3 having average molecular weights ($\overline{M}_n$) of from 7500 g/mol to 100,000 g/mol.

5. Use of the aralkyl phenols corresponding to formula (I) of claims 1 to 3 as chain terminators for the preparation of thermoplastic, aromatic polycarbonates.

6. A process for the preparation of the thermoplastic aromatic polycarbonates of claims 1 to 4 by the reaction of reactive carbonic acid derivatives with diphenols, chain terminators and optionally branching agents by the known two-face interface process, by the known process in homogeneous solution or by the known solvent-free transesterification process, characterised in that phenols corresponding to formula (I) of claim 1 are used as chain terminators.

7. Use of the polycarbonates of claims 1 to 4 for the production of moulded articles for optical purposes.

8. Use according to claim 7 for the production of data stores and audio compact disks.

**Revendications**

1. Polycarbonates aromatiques thermoplastiques ayant des poids moléculaires moyens $\overline{M}_n$ (moyennes numériques, déterminées par chromatographie sur gel après étalonnage préalable) d'au moins 5000 g/mole, à base de diphénols, d'agents de terminaison de chaîne et le cas échéant d'agents de ramification, caractérisés en ce que les agents de terminaison de chaîne répondent à la formule (I)

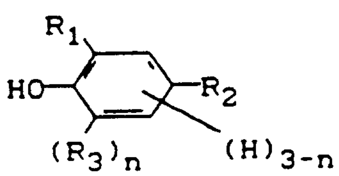

(I)

dans laquelle $R_1$, $R_2$ et $R_3$ sont identiques ou différents et sont des groupes alkyle en $C_2$ à $C_{12}$ ou aralkyle en $C_8$ à $C_{20}$, l'un au moins des restes $R_1$ et $R_2$ étant un reste aralkyle en $C_8$ à $C_{20}$, et "n" ayant une valeur comprise entre 0,5 et 1.

2. Polycarbonates suivant la revendication 1, caractérisés en ce que dans les agents de terminaison de chaîne de formule (I), "n" a une valeur de 0,6 à 0,9.

3. Polycarbonates suivant la revendication 1, caractérisés en ce que dans les restes aralkyle des agents de terminaison de chaîne de formule (I), Ar est un groupe phényle, diphényle ou naphtyle.

4. Polycarbonates suivant les revendications 1 à 3, ayant des poids moléculaires moyens ($\overline{M}_n$) de 7500 g/mole à 100 000 g/mole.

5. Utilisation des aralkylphénols de formule (I) suivant les revendications 1 à 3 comme agents de terminaison de chaîne pour la production de polycarbonates aromatiques thermoplastiques.

6. Procédé de production des polycarbonates aromatiques thermoplastiques suivant les revendications 1 à 4, par le procédé connu à l'interface entre deux phases, par le procédé connu en solution homogène ou par le procédé connu de transestérification à l'état fondu par réaction de dérivés réactifs d'acide carbonique avec des diphénols, des agents de terminaison de chaîne et le cas échéant des agents de ramification, caractérisé en ce qu'on utilise comme agents de terminaison de chaîne des phénols de formule (I) suivant la revendication 1.

7. Utilisation des polycarbonates des revendications 1 à 4 pour la production de corps de forme destinés à des applications optiques.

8. Utilisation suivant la revendication 7 pour la production de mémoires de données et de disques compacts pour enregistrements sonores.